# EUROPÄISCHE PATENTANMELDUNG

(11) **EP 3 376 367 A1**
(43) Veröffentlichungstag der Anmeldung: **19.09.2018**
(21) Anmeldenummer: 17160484.6
(22) Anmeldetag: 13.03.2017
(51) Int. Cl.: G06F 3/16, G06F 3/01

(54) **QUITTIEREN EINES ÜBERFÜHRENS EINES GUTES**

(71) Anmelder: Siemens Aktiengesellschaft, 80333 München (DE)
(72) Erfinder: KRÄNZLE, Ulrich, 78333 Stockach (DE)
(74) Vertreter: Maier, Daniel Oliver

(57) **Zusammenfassung**

Ein Überführen von Gütern 4 wie Gepäckstücken oder Postsendungen während eines Sortierprozesses oder eines Verladens findet oftmals noch manuell unterstützt statt. Es besteht jedoch der Bedarf, das Überführen möglichst effizient zu dokumentieren, ohne den manuell unterstützten Arbeitsfluss zu stören. Die Erfindung offenbart eine Datenbrille 6 und ein Verfahren zum Quittieren eines Überführens eines mit einer Bestimmungsinformation 2 markierten Gutes 4 mit einer Datenbrille 6. Die Datenbrille 6 zum Erfassen handfreier Befehle und der Bestimmungsinformation 2 ausgestaltet. Die Datenbrille 6 erfasst eine Kontrollinformation 8, welche die Bestimmungsinformation 2 bestätigt. Falls die Kontrollinformation 8 die Bestimmungsinformation 2 bestätigt, wird das Überführen quittiert. Das Quittieren erfolgt handfrei, so dass der manuell unterstützte Arbeitsfluss nicht beeinträchtigt wird.

## Beschreibung

Die vorliegende Erfindung betrifft eine Datenbrille geeignet zum Quittieren eines Überführens eines Gutes anhand einer Bestimmungsinformation und ein Verfahren zum Quittieren des Überführens mit einer erfindungsgemäßen Datenbrille.

Während viele Prozesse beim Transportieren von Gütern in der Logistik, in Förderanlagen, bei Kommissioniertätigkeiten, in Flughafengepäcksortieranlagen und in Postsortieranlagen weitgehend automatisiert ablaufen, wird besonders an Endstellen beim Be- und Entladen und somit beim Überführen von Gütern noch immer manuell gearbeitet. Unter einer Endstelle soll hier jede Stelle eines Transportsystems verstanden werden, an der Güter manuell oder zumindest manuell assistiert überführt werden. Das Überführen geschieht hierbei in Abhängigkeit von einer Bestimmungsinformation des Gutes. Bei jedem Überführvorgang wird das Gut von einer Ursprungsposition an eine Zielposition überführt, wobei die Ursprungs- und/oder die Zielposition aus einer Menge möglicher Positionen auswählbar sein kann. Insbesondere wenn ein Gut mehrfach überführt wird, ist eine Zuordnung von Ursprungs- und/oder Zielposition anhand der Bestimmungsinformation des Gutes nicht notwendigerweise intuitiv, beispielsweise bei der Zuordnung einer Adresse zu einem Zustellfahrzeug, so dass leicht Fehler geschehen können.

Bei der Post- und Paketsortierung wird das Gut beim Zustellen vom Zustellfahrzeug an einen Empfänger überführt, und bei der Entnahme von einem Förderband und Einladung in eines von mehreren möglichen Zustellfahrzeugen. Um eine Nachverfolgung der Sendungen zu ermöglichen, muss das Überführen registriert werden. In Flughäfen mit automatischer Gepäckförderanlage werden Gepäckstücke an einem Förderband zum Verladen auf einen einem Flugzeug zugeordneten Gepäckanhänger bereitgestellt. Jedes eingeladene Gepäckstück muss registriert werden, um die Gepäckstücke mit der Passagierliste abzugleichen.

Bislang wird die Bestimmungsinformation beim Überführen eines Gutes mit einem handbedienten Gerät, beispielsweise ein Scanner, erfasst. Mit dem Gerät kann auch eine Unterschrift, die das Überführen quittiert, erfasst werden. Die Hände des Bedieners sind hierbei jedoch nicht zum Arbeiten frei. Das Erfassen eines Barcodes als Bestimmungsinformation mit einer eine Kamera umfassenden Datenbrille ist bekannt. Das tatsächliche Überführen im Anschluss an die Erfassung wird jedoch nicht überwacht. Es findet keine Überprüfung der erfassten Bestimmungsinformation unabhängig von dieser erfassten Bestimmungsinformation statt und bei fehlerhafter Erfassung muss weiterhin ein handbedientes Gerät zur Hilfe genommen werden.

Der vorliegenden Erfindung liegt daher die Aufgabe zugrunde, eine Vorrichtung und ein Verfahren zum Quittieren eines Überführens eines mit einer Bestimmungsinformation markierten Gutes. Diese Aufgabe wird durch die in den unabhängigen Ansprüchen beschriebenen Lösungen gelöst.

Die erfindungsgemäße Lösung sieht ein Verfahren zum Quittieren eines Überführens eines mit einer Bestimmungsinformation markierten Gutes anhand besagter Bestimmungsinformation unter Verwendung einer zur Entgegennahme von handfreien Befehlen adaptierten Datenbrille vor, umfassend die Verfahrensschritte:
a) in Antwort auf einen handfreien Befehl erfasst die Datenbrille die Bestimmungsinformation mit der das Gut markiert ist;
b) die Datenbrille erfasst zudem eine Kontrollinformation zur Bestätigung des Überführens;
c) Quittieren des Überführens falls die Kontrollinformation die Bestimmungsinformation bestätigt.

Unter einem handfreien Befehl sollen sämtliche von der Datenbrille erfassbaren Eingaben eines Trägers der Datenbrille verstanden werden, bei denen die die Hände des Trägers weiterhin für das Überführen verwendet werden können, also beispielsweise Sprach- und/oder Bewegungsbefehle, insbesondere Augenbewegungen. Simples auf ein Objekt blicken und Blinzeln und/oder zeitliches Verweilen mit dem Blick auf dem Objekt ist ein handfreier Befehl. Das Auge kann somit in der Art einer Computermaus als Augenmaus agieren. Der Arbeitsfluss wird so nicht unterbrochen.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann die Kontrollinformation die Bestimmungsinformation bestätigen anhand einer Übereinstimmung von Kontrollinformation und Bestimmungsinformation oder anhand einer gespeicherten Datenstruktur, welche die Kontrollinformation der Bestimmungsinformation zuordnet. Die zum Quittieren erforderliche Übereinstimmung von Kontrollinformation und Bestimmungsinformation kann exakt oder eine in der gespeicherten Datenstruktur enthaltene Entsprechung bzw. Abbildung sein.

Um auch bei Schwierigkeiten beim Erfassen der tatsächlichen Bestimmungsinformation, mit der das Gut markiert ist, beispielsweise bei unvollständiger Erfassung und/oder bei nicht korrektem Auslesen der Bestimmungsinformation (insbesondere relevant, wenn die Bestimmungsinformation, mit der das Gut markiert ist handgeschrieben ist), kann die Datenbrille anhand der einen Bestimmungsinformation, mit der das Gut markiert ist, einen Satz erfasster Bestimmungsinformationen generieren und als Kontrollinformation einen handfreien Befehl zur Auswahl der tatsächlichen Bestimmungsinformation aus dem Satz erfasster Bestimmungsinformation erfassen. Das Erfassen der Bestimmungsinformation kann so automatisiert erfolgen und das Ergebnis dennoch von einem Menschen ohne viel Aufwand überprüft und/oder bestätigt werden. Das Generieren eines Satzes möglicher erfasster Bestimmungsinformationen ist zeitsparender als eine gänzlich manuelle Eingabe.

Gemäß einer Ausführungsform kann die Datenbrille die Kontrollinformation optisch und/oder automatisiert und/oder in Antwort auf einen handfreien Befehl erfassen.

Gemäß einer weiteren Ausführungsform kann die von der Datenbrille erfasste Kontrollinformation eine ortsaufgelöste Information umfassen. Ortsaufgelöste Informationen stellen besonders wenig fehleranfällige Kontrollinformationen dar.

Um dem Träger der Datenbrille Rückmeldungen zu geben, kann die Datenbrille ein Kontrollsignal generieren, falls die Kontrollinformation die Bestimmungsinformation bestätigt und/ oder falls die Kontrollinformation die Bestimmungsinformation nicht bestätigt und/oder bei Nichterfassen eines handfreien Befehls durch die Datenbrille. Das Kontrollsignal kann je nach Informationsgehalt unterschiedliche sein und optisch und/oder akustisch ausgestaltet sein.

Gemäß einer Ausführungsform kann die Kontrollinformation und/oder die Bestimmungsinformation an eine Datenbank übermittelt werden, falls die Kontrollinformation die Bestimmungsinformation bestätigt. Auf die Datenbank können weitere Systeme Zugriff haben, so dass ein einfacher Informationsaustausch gewährleistet ist.

Hinsichtlich einer Vorrichtung wird die vorstehend genannte Aufgabe gelöst durch eine Datenbrille geeignet zum Quittieren eines Überführens eines mit einer Bestimmungsinformation markierten Gutes anhand besagter Bestimmungsinformation und einer Kontrollinformation, umfassend eine Kontrolleinheit, mindestens eine Sensoreinheit, ein Erfassungsmittel und ein Anzeigemittel. Die Kontrolleinheit ist mit der Sensoreinheit, dem Erfassungsmittel und dem Anzeigemittel verbindbar und zu ihrer Steuerung ausgestaltet. Das Anzeigemittel ist ausgestaltet zur optischen und/oder akustischen Anzeige von Informationen für einen Träger der Datenbrille. Die Sensoreinheit ist ausgestaltet zur Entgegennahme und Übermittlung handfreier Befehle eines Trägers der Datenbrille. Das Erfassungsmittel ist ausgestaltet zum Erfassen der Bestimmungsinformation mit der das Gut markiert ist und/oder der Kontrollinformation. Die Kontrolleinheit ist ausgestaltet, zu prüfen, ob die Kontrollinformation die Bestimmungsinformation bestätigt und das Überführen zu quittieren, falls die Kontrollinformation die Bestimmungsinformation bestätigt.

Unter einer Sensoreinheit im Sinne der Erfindung soll eine Vorrichtung verstanden werden, die handfreie Befehle eines Trägers der Datenbrille erfassen kann. Als handfreie Befehle eignen sich Sprachbefehle, aber auch Bewegungen, vorzugsweise Kopf- und/oder Augenbewegungen, da die Datenbrille auf dem Kopf des Trägers montiert ist, insbesondere Abweichungen von einem typischen Bewegungsmuster. Für ein Erfassen von Kopfbewegungen eignet sich beispielsweise ein Beschleunigungssensor oder ein Sensor in der Art einer Wasserwaage, für ein Erfassen von Augenbewegungen eignet sich beispielsweise eine auf mindestens ein Auge des Trägers gerichtete Kamera. Zudem soll unter einer Sensoreinheit eine Vorrichtung verstanden werden, die Sprachbefehle erfassen kann. Im zuletzt genannten Fall würde die Sensoreinheit ein Mikrofon umfassen. Diese Aufzählung von Sensoreinheitstypen und handfreien Befehlsarten ist nicht abschließend.

Die Datenbrille kann eine gespeicherte Datenstruktur umfassen, auf welche die Kontrolleinheit Zugriff hat und welche die Kontrollinformation der Bestimmungsinformation zuordnet. Das Prüfen, ob die Kontrollinformation die Bestimmungsinformation bestätigt, kann so mit Hilfe der gespeicherten Datenstruktur durchgeführt werden.

Um die Datenbrille auch bei Problemen des Erfassungsmittels und/oder der Kontrolleinheit und/oder problematischer, beispielsweise unleserlicher, Ausgestaltung der Bestimmungsinformation, mit der das Gut markiert ist, möglichst zuverlässig betreiben zu können, kann die Kontrolleinheit ausgestaltet sein, anhand der einen Bestimmungsinformation, mit der das Gut markiert ist, einen Satz erfasster Bestimmungsinformationen zu generieren.

Um ein umfangreiches Erfassen von handfreien Befehlen und/oder Bestimmungsinformationen und/oder Kontrollinformationen und/oder weiterer Informationen zu ermöglichen, können das Erfassungsmittel und/ oder die Sensoreinheit eine oder mehr Komponenten umfassen, welche eine Kamera und/oder ein Mikrofon und/oder ein Scanner zum Erfassen kodierter Bestimmungsinformationen und/oder Kontrollinformationen und/oder einen Bewegungssensor zur Messung einer Bewegung des Körpers des Trägers der Datenbrille sein können.

Gemäß einer Ausführungsform kann die Kontrollinformation eine ortsaufgelöste Information sein, welche das Erfassungsmittel anhand einer Positionierung der Datenbrille automatisiert und/oder in Antwort auf einen handfreien Befehl erfassen kann.

Um einen unkomplizierten Informationsaustausch mit weiteren Systemen zu ermöglichen, kann die Datenbrille zudem eine Datenschnittstelle umfassen, über welche die Kontrolleinheit mit einer übergeordneten Datenbank verbindbar ist.

Um redundant zu prüfen, ob die Kontrollinformation die Bestimmungsinformation bestätigt und/oder um eine Aktualisierung der gespeicherten Datenstruktur der Datenbrille anhand der Datenbank-Datenstruktur der übergeordneten Datenbank oder umgekehrt zu ermöglichen, kann die gespeicherte Datenstruktur der Datenbrille mit einer Datenbank-Datenstruktur der übergeordneten Datenbank abgleichbar sein.

Gemäß einer Ausführungsform kann die Datenbank-Datenstruktur der übergeordneten Datenbank eine Zuordnung von Bestimmungsinformationen zu Kontrollinformationen umfassen.

Ausführungsformen der Erfindung werden nachfolgend anhand der Figuren beispielsweise näher erläutert. Dabei zeigt:

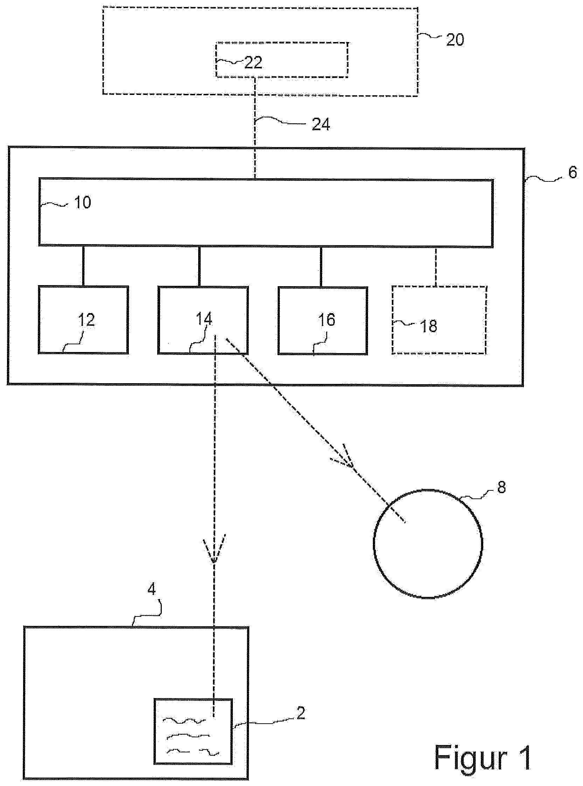

- Figur 1: eine Bestimmungsinformation und Kontrollinformation erfassende Datenbrille.

Figur 1 zeigt eine Datenbrille 6, welche gemäß einer Ausführungsform der Erfindung ein Abbild einer Bestimmungsinformation 2, mit der ein Gut 4 markiert ist, und eine Kontrollinformation 8 erfasst. Erforderliche Komponenten der Datenbrille 6 sind mit durchgezogenen Linien dargestellt, optionale und externe Komponenten mit gestrichelten Linien. Die Datenbrille 6 wird einem Träger zur Verfügung gestellt und von dem Träger wie eine normale Brille getragen, so dass seine Hände frei sind für ein Überführen des Gutes 4 von einer Ursprungsposition hin zu einer Zielposition. Ein manuell unterstütztes Überführen, bei dem die Datenbrille 6 zum Einsatz kommen kann, findet statt beim Ausliefern und Sortieren von postalischen Gütern, beim Picken von Gütern in Lagern, und in Flughafen-Gepäcksortieranlagen, insbesondere bei der Verladung von Gepäckstücken von einem Förderbandende auf einen Anhänger zum Transport zum Flugzeug. Die Datenbrille 2 ist ausgestaltet, über das reine Erfassen der Bestimmungsinformation 2 mittels der Datenbrille 6 eine weitere Kontrollinformation 8 zu erfassen und das Überführen zu quittieren, falls die Kontrollinformation 8 die Bestimmungsinformation 2 bestätigt. Das Erfassen von der Bestimmungsinformation 2 und/oder der Kontrollinformation 8 erfolgt in Antwort auf einen handfreien Befehl, kann aber auch automatisch erfolgen. Die Datenbrille 6 erfasst Informationen und Eingaben, die typischerweise manuell eingebbar sind.

Im Folgenden soll gemäß einer Ausführungsform ein Verladen von Gepäckstücken auf einen Anhänger für einen bestimmten Flug beschrieben werden. Da auf einem Förderbandende von Flughafen-Gepäcksortieranlagen Gepäckstücke von mehreren Flügen bereitgestellt werden, muss sichergestellt werden, dass auf den Anhänger nur die Gepäckstücke für den bestimmten Flug aufgeladen werden. Jedes Gepäckstück ist als Gut 4 ist markiert mit einem Gepäckanhänger, der Bestimmungsinformation 2, welcher den vorgesehenen Flug sowie weitere Daten enthält. Aus Sicherheitsgründen muss jedes eingeladene Gepäckstück registriert, das Überführen also quittiert werden, um die Gepäckstücke mit der Passagierliste abzugleichen.

Die die Datenbrille 6 umfasst als Komponenten mindestens eine Kontrolleinheit 10, eine Sensoreinheit 12, ein Erfassungsmittel 14 und ein Anzeigemittel 16. Die Kontrolleinheit 10 ist zur Steuerung mit den anderen Komponenten der Datenbrille 6 verbunden ausgestaltet. Die Sensoreinheit 12 ist ausgestaltet zur Entgegennahme handfreier Befehle des Trägers der Datenbrille 6. Die Sensoreinheit 12 und das Erfassungsmittel 14 umfassen einen oder mehrere Komponenten, beispielsweise eine Kamera und/oder ein Mikrofon und/oder ein Scanner zum Erfassen kodierter Bestimmungsinformationen 2 und/oder Kontrollinformationen 8 und/oder einen Bewegungssensor zur Messung einer Bewegung des Körpers des Trägers der Datenbrille 6.

Der Träger richtet seinen Blick auf den Gepäckanhänger eines Gepäckstücks. Die Sensoreinheit 12 erfasst die hierbei stattfindenden Kopf- und Augenbewegungen und somit die Blickrichtung. Das Anzeigemittel 16 als optisches Display im Sichtfeld des Trägers zeigt gegebenenfalls optisch einen Erfassungsbereich des Erfassungsmittels 14 für den Träger an. Das Sichtfeld des Trägers umfasst den Erfassungsbereich des Erfassungsmittels 14. Der Träger bestätigt die richtige Positionierung des Erfassungsbereichs des Erfassungsmittels 14 mit einem Blickbefehl (Kopfbewegung, Blinzeln, o.ä.) und/oder Sprachbefehl, dieser handfreie Befehl wird von der Sensoreinheit 12 erfasst und an die Kontrolleinheit 10 übermittelt. Das Erfassungsmittel 14 liest nun den Gepäckanhänger ein und erfasst somit die Bestimmungsinformation 2. Da der Träger der Datenbrille 6 die Bestimmungsinformation 2 ebenfalls ausliest, findet gleichzeitig ein maschinelles Erfassen durch die Datenbrille 6 und ein menschliches Erfassen der Bestimmungsinformation 2 statt. Der Träger überführt nun das Gut 4 anhand seiner Bestimmungsinformation 2, wobei der Träger die Zielposition des Überführens selber ausliest oder von der Datenbrille 6 angezeigt bekommt. Hierzu zeigt das Anzeigemittel 16 der Datenbrille 6 die erfasste Bestimmungsinformation 2 für den Träger der Datenbrille optisch und/oder akustisch an.

Ein Überprüfen der erfassten Bestimmungsinformation 2 kann somit maschinell und/oder menschlich erfolgen, so dass unterschiedliche Arten von Kontrollinformationen 8 herangezogen werden können: ein einzulesender Code oder schriftlich die Flugnummer, eine einfache Bestätigung (Nicken, Blinzeln, Sprachbefehl) und somit ein handfreier Befehl, mit dem der Träger der Datenbrille bestätigt, dass die verfasste Bestimmungsinformation 2 mit der ursprünglichen Bestimmungsinformation 2, mit der das Gut 4 markiert ist übereinstimmt. Auch eine Ortsinformation, die beim Aufladen des Gutes 4 auf den Anhänger oder beim Einladen in das Flugzeug erfasst wird, kann als Kontrollinformation 8 herangezogen werden. Die Ortsinformation kann automatisch erfassbar sein in der Art einer WLAN- oder GPS-Ortung oder durch Einlesen von Barcodes oder anderer maschinell einlesbarer Informationen, oder in der Nähe der Zielposition, also direkt am Anhänger oder am Flugzeugeingang, kann eine Vorrichtung positioniert sein, die ein vom Erfassungsmittel 14 erfassbares Signal aussendet, sobald sich die Datenbrille 6 und somit der Träger beim Überführen in der Nähe der Vorrichtung befindet.

Nach dem Erfassen der Bestimmungsinformation 2 und der Kontrollinformation 8 wird von der Kontrolleinheit 10 geprüft, ob die Kontrollinformation 8 die Bestimmungsinformation 2 bestätigt. Wenn die vom Gepäckanhänger erfasste Flugnummer, also die Bestimmungsinformation 2, mit der Kontrollinformation 8 übereinstimmt, wird das Einladen des Gepäckstücks quittiert. Das Quittieren wird mit einem Kontrollsignal angezeigt. Wenn das Gepäckstück versehentlich auf einen falschen Anhänger geladen wurde, stimmt die Kontrollinformation 8 nicht mit der Bestimmungsinformation 2 überein und die Datenbrille generiert ein Kontrollsignal, welches von dem das Quittieren anzeigende Kontrollsignal abweicht, so dass der Träger der Datenbrille 6 das Gepäckstück 4 wieder entlädt und anschließend richtig überführt.

Um Änderungen der Passagierliste (nichterscheinende Passagiere, Flugroutenänderungen, ...), die nicht vom Gepäckanhänger abgebildet sind, zu berücksichtigen, umfasst die Datenbrille 6 eine gespeicherte Datenstruktur 18, auf welche die Kontrolleinheit 10 Zugriff hat. Die Datenstruktur ordnet die Kontrollinformation 8 der Bestimmungsinformation 2 zu. In der Datenstruktur 18 wird zudem ein erfolgtes Quittieren abgespeichert.

Die Datenbrille 6 umfasst eine Datenschnittstelle 24, über welche die Kontrolleinheit 10 mit einer übergeordneten Datenbank 20 als Steuerung der Flughafen-Gepäcksortieranlage und einer von diesen umfassten Datenbank-Datenstruktur 22 verbindbar ist. Die gespeicherte Datenstruktur 18 wird über die Datenschnittstelle 24 mit der Datenbank-Datenstruktur 22 abgeglichen, wobei ein Abgleich in beide Richtungen erfolgen kann. Das erfolgte Quittieren und eventuell zusätzlich die Kontrollinformation 8 und/oder die Bestimmungsinformation 2 werden an die Datenbank 20 übermittelt. Das Quittieren des Einladens ist somit nicht nur lokal von der Datenstruktur 18 der Datenbrille 6 abgespeichert und die Datenbrille 6 hat Zugriff auf weitere Informationen der Datenbank 20 sowie eventuell deren Rechenleistung.

Gemäß einer Ausführungsform kommt die erfindungsgemäße Datenbrille 6 bei der Paketzustellung zum Einsatz. Beim Beladen eines Kurierfahrzeugs werden von einem Förderband einzelne Pakete genommen, die Sensoreinheit 12 erfasst die Blickrichtung des Trägers der Datenbrille 6 und das Erfassungsmittel erfasst somit die Adresse des Pakets als Bestimmungsinformation 2 in Klarschrift oder als Barcode. Falls die Kontrolleinheit 10 Schwierigkeiten beim Auslesen der vom Erfassungsmittel 14 erfassten Adresse hat, generiert die Kontrolleinheit 10 anhand der einen Adresse, mit der das Paket markiert ist, einen Satz möglicher Adressen und somit einen Satz erfasster Bestimmungsinformationen 2. Dem Träger der Datenbrille wird dieser Satz von Bestimmungsinformationen 2 vom Anzeigemittel 16 angezeigt, woraufhin er mit einem handfreien Befehl die tatsächliche Bestimmungsinformation 2 aus dem Satz von Bestimmungsinformationen 2 auswählt. Somit stehen dem Träger weiterhin seine Hände zum Überführen zur Verfügung. Die Auswahl der tatsächlichen Bestimmungsinformation 2 und somit die Bestätigung einer möglichen Bestimmungsinformation 2 dient als Kontrollinformation 8.

Das Paket wird nun in den Laderaum des Kurierfahrzeugs an eine Ablagestelle als Zielposition überführt, welches in regelmäßigen Abständen mit Ortsmarkierungen, beispielsweise einfachen Barcodes, versehen ist, die von dem Erfassungsmittel 14 mit einem Lesealgorithmus erkannt werden. Diese Ortsmarkierungen dienen einerseits als Kontrollinformationen 10 und ermöglichen andererseits eine örtliche Zuordnung der Ablagestelle im Laderaum. Nach Beendigung des Beladens mit allen Paketen sind alle zuzustellenden Pakete und deren Ablageorte im Kurierfahrzeug bekannt.

Am Zustellpunkt muss nun ein Kurierfahrer als Träger der Datenbrille 6 aus der Vielzahl von Paketen im Laderaum das zuzustellende Paket für den Zustellpunkt herausholen. Der Zustellpunkt ist der Datenbrille 6 anhand von GPS-Daten bekannt, das zuzustellende Paket ist somit ebenfalls bekannt. Das Anzeigemittel 16 zeigt dem Träger die Adresse des zuzustellenden Pakets, die in die Bestimmungsinformation 2 abbildbar ist, und/oder die Ablagestelle im Laderaum an, als Fachnummer im Regal oder als eingeblendete Richtungsanzeige, insbesondere wenn die Ortsmarkierungen im Kurierfahrzeug erkannt werden. Als handfreien Befehlt richtet der Träger seinen Blick auf die Bestimmungsinformation 2 des Pakets, welche daraufhin vom Erfassungsmittel 14 erfasst wird. Falls die vom Anzeigemittel 16 angezeigte Adresse mit der Bestimmungsinformation 2, mit der das Paket markiert ist, übereinstimmt, entnimmt der Träger das Paket und bestätigt die Entnahme mit einem Blick- und/oder Sprachbefehl. Der Blick- und/oder Sprachbefehl wird als Kontrollinformation 8 erfasst, welche das Entnehmen des Pakets aus dem Kurierfahrzeug quittiert.

Das Paket wird nun an den Kunden übergeben, wobei die Übergabe an den Kunden durch Unterschrift, beispielsweise auf dem Paket selber, quittiert werden kann. Diese Unterschrift und/oder die gesamte Übergabe werden vom Erfassungsmittel 14 fotografiert und/oder gefilmt, wobei das Fotografieren bzw. Filmen mit handfreien Befehlen gesteuert wird und die Aufnahmen das Übergeben noch einmal quittieren.

Gemäß einer Ausführungsform ist das Gut 4 mit einem optischen Abbild der Bestimmungsinformation 2 markiert. Zum Erfassen muss das Abbild der Bestimmungsinformation 2 lokalisiert werden, wobei das Lokalisieren entweder vollkommen autonom durch den Träger der Datenbrille 6 erfolgt, oder indem ein Anzeigemittel 16 dem Träger hilft, das Gut 4 selber und die Bestimmungsinformation 2, mit der das Gut 4 markiert ist, zu lokalisieren. Die Sensoreinheit 12 erfasst die Kopf- und/oder Augenbewegungen des Trägers, woraufhin der Erfassungsbereich des Erfassungsmittels 14 auf das Abbild der Bestimmungsinformation 2 gerichtet wird. Die korrekte Positionierung des Erfassungsbereichs wird mit einem handfreien Befehl bestätigt. Das Abbild der Bestimmungsinformation 2 wird erfasst und die Kontrolleinheit 10 der Datenbrille 6 generiert, beispielsweise mittels Texterkennung (OCR), mindestens eine erfasste Bestimmungsinformation 2. Falls beim Generieren der erfassten Bestimmungsinformation 2 Schwierigkeiten auftreten, generiert die Kontrolleinheit 10 einen Satz wahrscheinlicher Bestimmungsinformationen 2, die dem Träger vom Anzeigemittel 16 angezeigt werden und aus denen der Träger die tatsächliche bzw. ursprüngliche Bestimmungsinformation 2, mit der das Gut 4 markiert ist, auswählt. Falls keine der erfassten Bestimmungsinformationen 2 mit der ursprünglichen Bestimmungsinformation übereinstimmt, kann der Träger auch einen handfreien Befehl zum erneuten Erfassen durch das Erfassungsmittel 14 und/oder zum erneuten Auslesen durch die Kontrolleinheit 10 aussenden.

Als Kontrollinformation 8 eignen sich besonders gut Teilinformationen der Bestimmungsinformation. Um ein korrektes Überführen beim Beladen eines Flugzeuges zu quittieren, genügt beispielsweise als Kontrollinformation 8 die Flugnummer, die in der Bestimmungsinformation 2 enthalten ist. Jedes Gepäckstück 4 ist eindeutig einer einzigartigen Bestimmungsinformation 2 zugeordnet, alle Gepäckstücke mit gleicher Flugnummer teilen sich eine gemeinsame Flugnummer als gemeinsame Kontrollinformation 8.

Das Erfassen von Bestimmungsinformation 2 und/oder Kontrollinformation 8 kann optisch und/oder automatisiert und/oder in Antwort auf einen handfreien Befehl erfolgen. Da die Bestimmungsinformation 2 auch visuell vom Träger der Datenbrille 6 erfasst wird, kann auch alleine die Bestätigung, dass die von der Datenbrille 6 erfasste Bestimmungsinformation 2 mit der Bestimmungsinformation 2, mit der das Gut 4 markiert ist, übereinstimmt, als Kontrollinformation 8 herangezogen werden.

Die Bestimmungsinformation 2 des Gutes 4 bestimmt, an welcher Ursprungsposition sich das Gut vor dem Überführen befindet und an welche Zielposition das Gut 4 überführt werden soll. Das Gut 4 muss somit zwingend vor dem Überführen mit einer Bestimmungsinformation 2 markiert und einer oder mehreren Kontrollinformationen 8 zugeordnet werden. Das Quittieren bestätigt ein korrektes Überführen gemäß Bestimmungsinformation 2. Ein korrektes Überführen kann einfach oder mehrfach quittiert werden, wobei mit steigender Häufigkeit des Quittierens die Zuverlässigkeit steigt.

Gemäß einer Ausführungsform zeigt das Anzeigemittel 16 Informationen im Sichtfeld des Trägers der Datenbrille 6 an, wobei die Positionierung in Abhängigkeit von der Informationsart und/oder der Blickrichtung des Trägers erfolgt. Das Anzeigemittel 16 kann Informationen im Fokus und/oder in der Peripherie des Sichtfeldes anzeigen, wobei die Positionierung von der Kontrolleinheit 10 steuerbar ist, unter Umständen in Abhängigkeit vom Input der Sensoreinheit 12 an die Kontrolleinheit 10.

Gemäß einer weiteren Ausführungsform wird die Datenbrille 6 beim Warten einer Anlage verwendet, der Träger der Datenbrille 6 ist hierbei ein Techniker. Das Gut ist hierbei ein Objekt bzw. Anlagenteil. Da die Arbeit innerhalb der Anlage räumlich sehr beengt sein kann und meist Werkzeuge und Material mitgeführt werden müssen, ist es sinnvoll, beide Hände frei zu haben. Bei schmutzigem Arbeitsumfeld werden keine Handhelds oder ähnliche Geräte zur Informationsanzeige verschmutzt, das Anzeigemittel 16 übernimmt die Informationsanzeige. Arbeitshandschuhe müssen nicht ausgezogen werden. Beim Warten soll überführen hierbei verstanden werden als überführen eines ungewarteten bzw. noch nicht kontrollierten Objektes in ein gewartetes bzw. kontrolliertes Objekt. Das Quittieren bestätigt, dass das betreffende Objekt überführt, also kontrolliert und allenfalls gewartet, wurde.

Bei weitläufigen Anlagen ist die Orientierung innerhalb der Anlage schwierig. Durch den Blick des Technikers, der einen handfreien Befehl darstellt, werden Bestimmungsinformationen 2, typischerweise spezielle Barcodes zur Ortsidentifikation oder Teilenummern auf Anlagenteilen. Durch Abgleich mit der gespeicherten Datenstruktur 18 kann identifiziert werden, wo sich die erfasste Bestimmungsinformation 2 befindet und somit eine vom Anzeigemittel 16 übermittelte Anweisung an den Techniker erzeugt werden. Spätestens nach der zweiten erfassten Bestimmungsinformation 2 kann festgestellt werden, ob die Richtung stimmt. Mittels optischer Bilderkennung können anhand von dem von dem Erfassungsmittel 14 erfassten Abbild weitere Merkmale zur Ortsidentifikation und Bewegungsrichtung ermittelt und daraus eine vom Anzeigemittel 16 übermittelte Navigation erzeugt werden.

Oftmals sind mehrere gleiche Anlagenteile dicht nebeneinander verbaut, durch Anvisieren der mit Bestimmungsinformationen 2 markierten Anlageteile kann beim Anvisieren des richtigen Anlageteils ein bestätigendes Kontrollsignal generiert werden. Die Erkennung des Anlagenteils kann auch über Bilderkennungssoftware eines vom Erfassungsmittel 14 erfassten Abbilds bewerkstelligt werden. Als Kontrollinformation 8 dient hier eine Bestätigung, dass die erfasste Bestimmungsinformation 2 mit dem richtigen Anlageteil übereinstimmt und dieses gewartet wurde.

Bei der Fehlersuche ist die Erkennung von Anlageteilen sehr wichtig. Um beispielsweise Signale richtig messen zu können, muss ein Stecker richtig erkannt werden. Wird an diesem Stecker ein Messwert, beispielsweise eine bestimmte Spannung, mit einem Messgerät gemessen, kann über handfreie Befehle, beispielsweise Blick-Befehle, der Sollwert vom Anzeigemittel 16 eingeblendet werden. Das Messgerät kann mit der Datenbrille 6 verbindbar sein und der Messwert kann vom Anzeigemittel 16 eingeblendet und direkt mit dem Sollwert verglichen werden, was bei Übereinstimmung quittiert wird. Der Messwert wird von einem unkontrollierten Wert in einen kontrollierten Wert überführt, als Kontrollinformation 8 dient der Sollwert.

### Bezugszeichenliste

- 2: Bestimmungsinformation
- 4: Gut
- 6: Datenbrille
- 8: Kontrollinformation
- 10: Kontrolleinheit
- 12: Sensoreinheit
- 14: Erfassungsmittel
- 16: Anzeigemittel
- 18: Datenstruktur
- 20: Datenbank
- 22: Datenbank-Datenstruktur
- 24: Datenschnittstelle

## Patentansprüche

1. Verfahren zum Quittieren eines Überführens eines mit einer Bestimmungsinformation (2) markierten Gutes (4) anhand besagter Bestimmungsinformation (2) unter Verwendung einer zur Entgegennahme von handfreien Befehlen adaptierten Datenbrille, umfassend die Verfahrensschritte
a) in Antwort auf einen handfreien Befehl erfasst die Datenbrille (6) die Bestimmungsinformation (2) mit der das Gut (4) markiert ist;
b) die Datenbrille (6) erfasst zudem eine Kontrollinformation (8) zur Bestätigung des Überführens;
c) Quittieren des Überführens falls die Kontrollinformation (8) die Bestimmungsinformation (2) bestätigt.

2. Verfahren nach Anspruch 1, **dadurch gekennzeichnet, dass** die Kontrollinformation (8) die Bestimmungsinformation (2) bestätigt anhand einer Übereinstimmung von Kontrollinformation (8) und Bestimmungsinformation (2) oder anhand einer gespeicherten Datenstruktur (18), welche die Kontrollinformation (8) der Bestimmungsinformation (2) zuordnet.

3. Verfahren nach einem der vorangehenden Ansprüche, zudem umfassend den Verfahrensschritt
die Datenbrille (6) generiert anhand der einen Bestimmungsinformation (2), mit der das Gut (4) markiert ist, einen Satz erfasster Bestimmungsinformationen (2) und erfasst als Kontrollinformation (8) einen handfreien Befehl zur Auswahl der tatsächlichen Bestimmungsinformation (2) aus dem Satz erfasster Bestimmungsinformationen (2).

4. Verfahren nach einem der vorangehenden Ansprüche, **dadurch gekennzeichnet, dass**
die Datenbrille (6) die Kontrollinformation (8) optisch und/oder automatisiert und/oder in Antwort auf einen handfreien Befehl erfasst.

5. Verfahren nach einem der vorangehenden Ansprüche, **dadurch gekennzeichnet, dass**
die von der Datenbrille (6) erfasste Kontrollinformation (8) eine ortsaufgelöste Information umfasst.

6. Verfahren nach einem der vorangehenden Ansprüche, zudem umfassend den Verfahrensschritt
die Datenbrille (6) generiert ein Kontrollsignal falls die Kontrollinformation (8) die Bestimmungsinformation (2) bestätigt und/ oder falls die Kontrollinformation (8) die Bestimmungsinformation (2) nicht bestätigt und/oder bei Nichterfassen eines handfreien Befehls durch die Datenbrille (6).

7. Verfahren nach einem der vorangehenden Ansprüche, zudem umfassend den Verfahrensschritt
falls die Kontrollinformation (8) die Bestimmungsinformation (2) bestätigt, wird die Kontrollinformation (8) und/oder die Bestimmungsinformation (2) an eine Datenbank (20) übermittelt.

8. Datenbrille (6) geeignet zum Quittieren eines Überführens eines mit einer Bestimmungsinformation (2) markierten Gutes (4) anhand besagter Bestimmungsinformation (2) und einer Kontrollinformation (8), umfassend eine Kontrolleinheit (10), mindestens eine Sensoreinheit (12), ein Erfassungsmittel (14) und ein Anzeigemittel (16), wobei
- die Kontrolleinheit (10) mit der Sensoreinheit (12), dem Erfassungsmittel (14) und dem Anzeigemittel (16) verbindbar und zu ihrer Steuerung ausgestaltet ist;
- das Anzeigemittel (16) ausgestaltet ist zur optischen und/oder akustischen Anzeige von Informationen für einen Träger der Datenbrille (6);
- die Sensoreinheit (12) ausgestaltet ist zur Entgegennahme und Übermittlung handfreier Befehle eines Trägers der Datenbrille (6);
- das Erfassungsmittel (14) ausgestaltet ist zum Erfassen der Bestimmungsinformation (2) mit der das Gut (4) markiert ist und/oder der Kontrollinformation (8);
- die Kontrolleinheit (10) ausgestaltet ist, zu prüfen, ob die Kontrollinformation (8) die Bestimmungsinformation (2) bestätigt und das Überführen zu quittieren, falls die Kontrollinformation (8) die Bestimmungsinformation (2) bestätigt.

9. Datenbrille (6) nach Anspruch 8, **dadurch gekennzeichnet, dass**
die Datenbrille (6) eine gespeicherte Datenstruktur (18) umfasst, auf welche die Kontrolleinheit (10) Zugriff hat und welche die Kontrollinformation (8) der Bestimmungsinformation (2) zuordnet.

10. Datenbrille (6) nach einem der Ansprüche 8 bis 9, **dadurch gekennzeichnet, dass**
die Kontrolleinheit (10) ausgestaltet ist, anhand der einen Bestimmungsinformation (2), mit der das Gut (4) markiert ist, einen Satz erfasster Bestimmungsinformationen (2) zu generieren.

11. Datenbrille (6) nach einem der Ansprüche 8 bis 10, **dadurch gekennzeichnet, dass**
das Erfassungsmittel (14) und/ oder die Sensoreinheit (12) eine oder mehr Komponenten umfassen, welche eine Kamera und/oder ein Mikrofon und/oder ein Scanner zum Erfassen kodierter Bestimmungsinformationen (2) und/oder Kontrollinformationen (8) und/oder einen Bewegungssensor zur Messung einer Bewegung des Körpers des Trägers der Datenbrille (6) sind.

12. Datenbrille (6) nach einem der Ansprüche 8 bis 11, **dadurch gekennzeichnet, dass**
die Kontrollinformation (8) eine ortsaufgelöste Information ist, welche das Erfassungsmittel (14) anhand einer Positionierung der Datenbrille (6) automatisiert und/oder in Antwort auf einen handfreien Befehl erfasst.

13. Datenbrille (6) nach einem der Ansprüche 8 bis 12, **dadurch gekennzeichnet, dass**
die Datenbrille (6) zudem eine Datenschnittstelle (24) umfasst, über welche die Kontrolleinheit (10) mit einer übergeordneten Datenbank (20) verbindbar ist.

14. Datenbrille (6) nach einem der Ansprüche 9 und 13, **dadurch gekennzeichnet, dass**
die gespeicherte Datenstruktur (18) der Datenbrille (6) mit einer Datenbank-Datenstruktur (22) der übergeordneten Datenbank (20) abgleichbar ist.

15. Datenbrille (6) nach Anspruch 14, **dadurch gekennzeichnet, dass**
die Datenbank-Datenstruktur (22) der übergeordneten Datenbank (20) eine Zuordnung von Bestimmungsinformationen (2) zu Kontrollinformationen (8) umfasst.
